(19) Europäisches Patentamt
European Patent Office
Office européen des brevets

(11) **EP 4 213 240 A1**

(12) **EUROPEAN PATENT APPLICATION**

(43) Date of publication:
**19.07.2023 Bulletin 2023/29**

(21) Application number: **22206527.8**

(22) Date of filing: **10.11.2022**

(51) International Patent Classification (IPC):
**H01M 4/134** (2010.01)     **H01M 4/36** (2006.01)
**H01M 4/38** (2006.01)      **H01M 4/40** (2006.01)
**H01M 10/052** (2010.01)    **H01M 10/0565** (2010.01)
**H01M 10/0568** (2010.01)

(52) Cooperative Patent Classification (CPC):
**H01M 4/134; H01M 4/366; H01M 4/382;
H01M 4/387; H01M 4/405; H01M 10/052;
H01M 10/0565; H01M 10/0568**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.01.2022 JP 2022004057**

(71) Applicant: **TOYOTA JIDOSHA KABUSHIKI
KAISHA**
**Aichi-Ken 471-8571 (JP)**

(72) Inventor: **HORIKAWA, Daisuke**
**Toyota-shi, 471-8571 (JP)**

(74) Representative: **D Young & Co LLP**
**120 Holborn**
**London EC1N 2DY (GB)**

(54) **NEGATIVE ELECTRODE FOR LITHIUM SECONDARY BATTERY AND METHOD FOR MANUFACTURING NEGATIVE ELECTRODE FOR LITHIUM SECONDARY BATTERY**

(57)     A negative electrode (17) for a lithium secondary battery includes a negative electrode current collector (15) and a negative electrode layer (13). The negative electrode layer (13) includes a composite layer (18) and a single lithium metal layer (19). The composite layer (18) includes, as a negative electrode active material, an alloy of lithium metal and dissimilar metal. The composite layer (18) and the single lithium metal layer (19) are arranged in this order from the negative electrode current collector (15). The dissimilar metal is an element that is able to form a solid solution with the lithium metal or an element that is able to form an intermetallic compound with the lithium metal.

FIG. 1

**Description**

BACKGROUND OF THE INVENTION

1. Field of the Invention

The present disclosure relates to negative electrodes for lithium secondary batteries and methods for manufacturing a negative electrode for a lithium secondary battery.

2. Description of Related Art

Among batteries, lithium secondary batteries have been attracting attention due to their high output voltage.

Japanese Unexamined Patent Application Publication No. 2020-184513 (JP 2020-184513 A) discloses a lithium (Li) metal negative electrode battery in which a metal magnesium (Mg) layer containing metal magnesium is formed on one surface of a negative electrode current collector or one surface of a solid electrolyte layer.

Japanese Unexamined Patent Application Publication No. 2021-077640 (JP 2021-077640 A) discloses a negative electrode material that includes a metal thin film (gold (Au), magnesium (Mg), or silver (Ag)) at the interface between a lithium metal layer and a current collector.

SUMMARY OF THE INVENTION

A problem with lithium secondary batteries using a lithium metal, a lithium alloy, etc. as a negative electrode active material is that the capacity retention rate is reduced due to deactivation of the lithium metal caused by a volume change of the lithium metal during charging and discharging, and improvement in capacity retention rate is desired.

The present disclosure provides a negative electrode capable of improving the capacity retention rate of lithium secondary batteries.

A negative electrode for a lithium secondary battery according to a first aspect of the present disclosure includes a negative electrode current collector and a negative electrode layer. The negative electrode layer includes a composite layer and a single lithium metal layer, the composite layer including, as a negative electrode active material, an alloy of lithium metal and dissimilar metal. The composite layer and the single lithium metal layer are arranged in this order from the negative electrode current collector. The dissimilar metal is an element that is able to form a solid solution with the lithium metal or an element that is able to form an intermetallic compound with the lithium metal.

In the negative electrode according to the first aspect of the present disclosure, a ratio $Z$ of a thickness $X$ of the single lithium metal layer to a thickness $Y$ of the composite layer ($Z = X/Y$) may be $0.0001 \leq Z \leq 0.4$.

In the negative electrode according to the first aspect of the present disclosure, the ratio $Z$ may be $0.001 \leq Z \leq 0.3$.

In the negative electrode according to the first aspect of the present disclosure, an element percentage of lithium element in the alloy may be 30.00 atomic% or more and 99.97 atomic% or less.

In the negative electrode according to the first aspect of the present disclosure, mass of the alloy of the lithium metal and the dissimilar metal may be 50% or more of total mass of the composite layer.

In the negative electrode according to the first aspect of the present disclosure, the dissimilar metal may be one or more elements selected from the group consisting of magnesium (Mg), bismuth (Bi), palladium (Pd), tin (Sn), silicon (Si), gold (Au), silver (Ag), platinum (Pt), zinc (Zn), aluminum (Al), indium (In), strontium (Sr), barium (Ba), gallium (Ga), calcium (Ca), and germanium (Ge).

A method for manufacturing a negative electrode for a lithium secondary battery according to a second aspect of the present disclosure includes: preparing a negative electrode current collector; forming a composite layer including an alloy of lithium metal and dissimilar metal by vacuum-depositing the lithium metal and the dissimilar metal on the negative electrode current collector; and forming a single lithium metal layer by vacuum-depositing lithium metal on the composite layer. The dissimilar metal is an element that is able to form a solid solution with the lithium metal or an element that is able to form an intermetallic compound with the lithium metal.

In the method according to the second aspect of the present disclosure, a ratio $Z$ of a thickness $X$ of the single lithium metal layer to a thickness $Y$ of the composite layer ($Z = X/Y$) may be $0.0001 \leq Z \leq 0.4$.

In the method according to the second aspect of the present disclosure, the ratio $Z$ may be $0.001 \leq Z \leq 0.3$.

In the method according to the second aspect of the present disclosure, an element percentage of lithium element in the alloy may be 30.00 atomic% or more and 99.97 atomic% or less.

The present disclosure can provide a negative electrode capable of improving the capacity retention rate of lithium secondary batteries.

BRIEF DESCRIPTION OF THE DRAWINGS

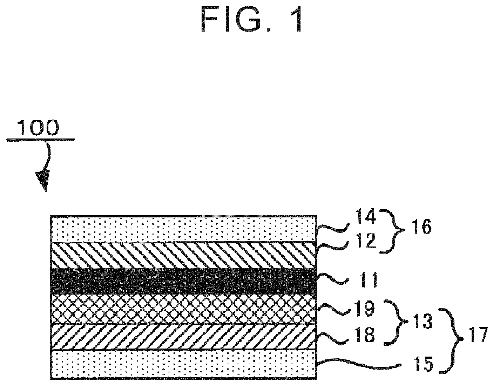

Features, advantages, and technical and industrial significance of exemplary embodiments of the invention will be described below with reference to the accompanying drawings, in which like signs denote like elements, and wherein: FIG. 1 is a schematic sectional view showing an example of a lithium secondary battery of the present disclosure.

DETAILED DESCRIPTION OF EMBODIMENTS

Hereinafter, an embodiment according to the present disclosure will be described. It should be noted that matters other than those specifically mentioned in the present specification and necessary to carry out the present disclosure (e.g., general configurations and manufacturing processes of a negative electrode and a lithium secondary battery that do not characterize the present disclosure) may be regarded as design matters of those skilled in the art. The present disclosure may be carried out based on the content disclosed in the present specification and the common general technical knowledge in the art. The dimensional relationships (such as length, width, and thickness) in the drawings do not reflect the actual dimensional relationships.
In the present specification, a hyphen "-" or word "to" indicating a numerical range is used to mean an inclusive range in which the numerical values before and after "-" or "to" are included as its lower and upper limit values.
Any combination of values can be used as upper and lower limit values of a numerical range.
A negative electrode for a lithium secondary battery according to the present disclosure includes a negative electrode current collector and a negative electrode layer. The negative electrode layer includes a composite layer and a single lithium metal layer in this order from the negative electrode current collector side, the composite layer containing, as a negative electrode active material, an alloy of lithium metal and dissimilar metal.
The dissimilar metal is an element that is able to form a solid solution with the lithium metal or an element that is able to form an intermetallic compound with the lithium metal.
In lithium secondary batteries, the capacity retention rate decreases because, for example, the nascent lithium metal surface continuously generated by dissolution and deposition of lithium metal during charging and discharging undergoes a decomposition reaction with an electrolyte and lone electrons of a negative electrode active material are generated by cracking of a negative electrode layer caused by a volume change of the lithium metal during charging and discharging.
It is usually desirable that the lithium (Li) and the dissimilar metal be uniformly alloyed. Crystal structure mismatch caused by compositional unevenness between Li and dissimilar metal in the alloy induces cracking of the negative electrode layer. The capacity retention rate of the lithium secondary battery therefore decreases. In the case of the negative electrode for a lithium secondary battery according to the present disclosure, there is a difference in metal composition between the single lithium metal layer and the composite layer containing an alloy of lithium metal and dissimilar metal, but such cracking of the negative electrode layer is less likely to occur, and the single lithium metal layer reduces the reaction between an electrolyte solution or electrolyte and the composite layer. The capacity retention rate and storage characteristics of the lithium secondary battery can therefore be improved.
When a lithium secondary battery operates at low temperatures, the Li conductivity in the electrolyte solution or electrolyte may decrease significantly and the resistance derived from the electrolyte solution or electrolyte may increase, so that the low-temperature output characteristics may deteriorate significantly.
According to the present disclosure, an increase in resistance component of the electrolyte solution or electrolyte is reduced, and high low-temperature output is obtained. This is presumed to be because the single lithium metal layer becomes thinner with charging and discharging, the reaction resistance of the single lithium metal layer therefore decreases, and the single lithium metal layer is preferentially used for charging and discharging.

Negative Electrode

The negative electrode of the present disclosure includes a negative electrode current collector and a negative electrode layer.

Negative Electrode Current Collector

The material of the negative electrode current collector may be a material that does not alloy with Li, and is, for example, stainless steel (SS), copper, or nickel. The negative electrode current collector is in the form of, for example, foil or a plate. The shape of the negative electrode current collector as viewed in plan is not particularly limited, but is, for example, a circle, an ellipse, a rectangle, or any desired polygon. The thickness of the negative electrode current collector varies depending on the shape of the negative electrode current collector, but may be, for example, in the range of 1 $\mu$m to 50 $\mu$m or in the range of 5 $\mu$m to 20 $\mu$m.

Negative Electrode Layer

The negative electrode layer includes a composite layer and a single lithium metal layer in this order from the negative electrode current collector side.

The composite layer contains, as a negative electrode active material, an alloy of lithium metal and dissimilar metal. The element percentage of lithium element in the alloy may be 30.00 atomic% or more and 99.97 atomic% or less.

In the present disclosure, the element percentage of lithium element in the alloy may be 30.00 atomic% or more and 99.97 atomic% or less even when the lithium secondary battery is fully charged.

In the present disclosure, the lithium secondary battery being fully charged means that the state of charge (SOC) of the lithium secondary battery is 100%. The SOC indicates the ratio of the remaining capacity to the full charge capacity of the battery, and the SOC for the full charge capacity is 100%.

The SOC may be estimated from, for example, the open-circuit voltage (OCV) of the lithium secondary battery.

The dissimilar metal may be any metal other than the lithium metal, and may be any element that is able to form a solid solution with the lithium metal or any element that is able to form an intermetallic compound with the lithium metal. The dissimilar metal may be, for example, one or more elements selected from the group consisting of Mg, Bi, Pd, Sn, Si, Au, Ag, Pt, Zn, Al, In, Sr, Ba, Ga, Ca, and Ge.

The composite layer of the present disclosure may contain other known negative electrode active material(s) as long as the composite layer contains, as a main component, an alloy of the lithium metal and the dissimilar metal as a negative electrode active material. In the present disclosure, the "main component" means a component contained in an amount of 50% by mass or more when the total mass of the composite layer is 100% by mass.

The single lithium metal layer may be any layer made of the lithium metal.

The thickness of the negative electrode layer is not particularly limited, but may be, for example, 10 $\mu$m to 100 $\mu$m. The ratio Z of the thickness X of the single lithium metal layer to the thickness Y of the composite layer (Z = X/Y) may be $0.0001 \leq Z \leq 0.4$. This ratio may be $0.001 \leq Z \leq 0.3$.

As an example of a method for forming a negative electrode layer, lithium metal and dissimilar metal are first simultaneously vacuum-deposited on one side of a negative electrode current collector to form a composite layer containing an alloy of lithium metal and dissimilar metal on the one side of the negative electrode current collector. Lithium metal is then vacuum-deposited on a surface of the composite layer to form a single lithium metal layer. A negative electrode layer composed of these two layers is thus formed.

An example of a method for simultaneously vacuum-depositing lithium metal and dissimilar metal on one side of a negative electrode current collector is a method in which two crucibles, one containing lithium metal and one containing dissimilar metal are prepared, and the crucibles are heated by electron beam heating or resistance heating so that the lithium metal and the dissimilar metal are simultaneously volatilized in a vacuum deposition apparatus and deposited on a negative electrode current collector.

The negative electrode of the present disclosure is a negative electrode for a lithium secondary battery.

A lithium secondary battery of the present disclosure includes a positive electrode layer, a negative electrode layer, and an electrolyte layer located between the positive electrode layer and the negative electrode layer, and uses the deposition and dissolution reactions of lithium metal as reactions of a negative electrode.

In the present disclosure, the "lithium secondary battery" refers to a battery that uses the deposition and dissolution reactions of lithium metal as reactions of a negative electrode.

FIG. 1 is a schematic sectional view showing an example of the lithium secondary battery of the present disclosure.

As shown in FIG. 1, a lithium secondary battery 100 includes: a positive electrode 16 including a positive electrode layer 12 and a positive electrode current collector 14; a negative electrode 17 including a negative electrode layer 13 and a negative electrode current collector 15; and an electrolyte layer 11 located between the positive electrode layer 12 and the negative electrode layer 13. The negative electrode layer 13 has a composite layer 18 and a single lithium metal layer 19 in this order from the negative electrode current collector 15 side.

Positive Electrode

The positive electrode includes a positive electrode layer and a positive electrode current collector.

Positive Electrode Layer

The positive electrode layer contains a positive electrode active material, and may contain a solid electrolyte, an electrically conductive material, a binding agent (binder), etc. as optional components.

There is no particular limitation on the type of positive electrode active material, and any material that can be used as an active material for lithium secondary batteries can be used. Examples of the positive electrode active material include a lithium metal (Li), a lithium alloy, $LiCoO_2$, $LiNi_{0.8}Co_{0.15}Al_{0.05}O_2$, $LiNi_xCo_{1-x}O_2$ (0 < x <1), $LiNi_{1/3}CO_{1/3}Mn_{1/3}O_2$, $LiMnO_2$, a heteroelement-substituted Li-Mn spinel, a lithium titanate, a lithium metal phosphate, LiCoN, $Li_2SiO_3$, $Li_4SiO_4$, a transition metal oxide, $TiS_2$, Si, $SiO_2$, a silicon (Si) alloy, and a lithium-storable intermetallic compound. Examples of the heteroelement-substituted Li-Mn spinel include $LiMn_{1.5}Ni_{0.5}O_4$, $LiMn_{1.5}Al_{0.5}O_4$, $LiMn_{1.5}Mg_{0.5}O_4$, $LiMn_{1.5}Co_{0.5}O_4$, $LiMn_{1.5}Fe_{0.5}O_4$, and $LiMn_{1.5}Zn_{0.5}O_4$. An example of the lithium titanate is $Li_4Ti_5O_{12}$. Examples of the lithium metal phosphate include $LiFePO_4$, $LiMnPO_4$, $LiCoPO_4$, and $LiNiPO_4$. Examples of the transition metal oxide include $V_2O_5$ and $MoO_3$. Examples of the lithium-storable intermetallic compound include $Mg_2Sn$, $Mg_2Ge$, $Mg_2Sb$, and $Cu_3Sb$.

Examples of the lithium alloy include Li-Au, Li-Mg, Li-Sn, Li-Si, Li-Al, Li-B, Li-C, Li-Ca, Li-Ga, Li-Ge, Li-As, Li-Se, Li-Ru, Li-Rh, Li-Pd, Li-Ag, Li-Cd, Li-In, Li-Sb, Li-Ir, Li-Pt, Li-Hg, Li-Pb, Li-Bi , Li-Zn, Li-Tl, Li-Te, and Li-At. Examples of the Si alloy include alloys of Si and a metal such as Li. The Si alloy may be an alloy of Si and at least one metal selected from the group consisting of Sn, Ge, and Al.

The form of the positive electrode active material is not particularly limited, but the positive electrode active material may be in the form of particles. When the positive electrode active material is in the form of particles, the positive electrode active material may be in the form of primary particles or secondary particles.

A coating layer containing a Li-ion conductive oxide may be formed on a surface of the positive electrode active material. This is because the coating layer can reduce the reaction between the positive electrode active material and the solid electrolyte.

Examples of the Li-ion conductive oxide include $LiNbO_3$, $Li_4Ti_5O_{12}$, and $Li_3PO_4$. The thickness of the coating layer is, for example, 0.1 nm or more, and may be 1 nm or more. The thickness of the coating layer is, for example, 100 nm or less, and may be 20 nm or less. The coating layer may cover, for example, 70% or more of the surface of the positive electrode active material, or may cover 90% or more of the surface of the positive electrode active material.

Examples of the solid electrolyte are similar to solid electrolytes that will be mentioned later as examples for the solid electrolyte layer.

The electrically conductive material can be a known electrically conductive material. Examples of the electrically conductive material include a carbon material and metal particles. Examples of the carbon material include at least one selected from the group consisting of acetylene black, furnace black, vapor grown carbon fibers (VGCFs), carbon nanotubes, and carbon nanofibers. Among all, the carbon material may be at least one selected from the group consisting of VGCFs, carbon nanotubes, and carbon nanofibers from the standpoint of electron conduction properties. Examples of the metal particles include particles of nickel (Ni), copper (Cu), iron (Fe), and stainless steel (SS). The content of the electrically conductive material in the positive electrode layer is not particularly limited.

Examples of the binding agent (binder) include acrylonitrile butadiene rubber (ABR), butadiene rubber (BR), polyvinylidene fluoride (PVDF), and styrene butadiene rubber (SBR). The content of the binder in the positive electrode layer is not particularly limited.

The thickness of the positive electrode layer is not particularly limited, but may be, for example, 10 μm to 100 μm, or 10 μm to 20 μm.

The positive electrode layer can be formed by a known method.

For example, the positive electrode layer can be formed by adding a positive electrode active material and, as necessary, other component(s) to a solvent and stirring the resultant mixture to produce a positive electrode layer forming paste, and applying the paste to one surface of a support and drying the paste.

Examples of the solvent include butyl acetate, butyl butyrate, mesitylene, tetralin, heptane, and N-methyl-2-pyrrolidone (NMP).

A method for applying a positive electrode layer forming paste to one surface of a support is not particularly limited, and examples of this method include a doctor blade method, a metal mask printing method, an electrostatic spraying method, a dip coating method, a spray coating method, a roll coating method, a gravure coating method, and a screen printing method.

A support having self-supporting properties can be selected as appropriate and used as the support. The support is not particularly limited, and can be, for example, metal foil such as Cu or Al.

Another method for forming a positive electrode layer is a method in which a positive electrode layer is formed by pressure-forming a powder of a positive electrode mixture including a positive electrode active material and, as necessary, other component(s). In the case of pressure-forming a powder of a positive electrode mixture, a press pressure of about 1 MPa or more and about 2000 MPa or less is usually applied to the powder.

The pressing method is not particularly limited, but is for example, a method in which a pressure is applied using a flat plate press, a roll press, etc.

Positive Electrode Current Collector

The positive electrode current collector can be a known metal that can be used as a current collector for lithium secondary batteries. Examples of such a metal include metal materials containing one or more elements selected from the group consisting of copper (Cu), nickel (Ni), aluminum (Al), vanadium (V), gold (Au), platinum (Pt), magnesium (Mg), iron (Fe), titanium (Ti), cobalt (Co), chromium (Cr), zinc (Zn), germanium (Ge), and indium (In). Examples of the positive electrode current collector include stainless steel (SS), aluminum, nickel, iron, titanium, and carbon.

The form of the positive electrode current collector is not particularly limited, and the positive electrode current collector may be in various forms such as foil and mesh. The thickness of the positive electrode current collector varies depending on the shape of the positive electrode current collector, but may be, for example, in the range of 1 $\mu$m to 50 $\mu$m or in the range of 5 $\mu$m to 20 $\mu$m.

Electrolyte Layer

The electrolyte layer contains at least an electrolyte.

The electrolyte can be an aqueous electrolyte solution, a non-aqueous electrolyte solution, a gel electrolyte, a solid electrolyte, etc. One of these electrolytes may be used alone, or two or more of these electrolytes may be used in combination.

The solvent of the aqueous electrolyte solution contains water as a main component. That is, water may account for 50 mol% or more, particularly 70 mol% or more, more particularly 90 mol% or more of the total amount of the solvent (liquid component) (100 mol%) of the electrolyte solution. The upper limit of the content of water in the solvent is not particularly limited.

The solvent contains water as a main component. However, the solvent may contain a solvent other than water. The solvent other than water is, for example, one or more selected from ethers, carbonates, nitriles, alcohols, ketones, amines, amides, sulfur compounds, and hydrocarbons. The solvent other than water may account for 50 mol% or less, particularly 30 mol% or less, more particularly 10 mol% or less of the total amount of the solvent (liquid component) (100 mol%) of the electrolyte solution.

The aqueous electrolyte solution used in the present disclosure contains an electrolyte. The electrolyte for the aqueous electrolyte solution can be a known electrolyte. Examples of the electrolyte include lithium salts of imidic acid compounds, nitrates, acetates, sulfates, etc.. Specific examples of the electrolyte include lithium bis(fluorosulfonyl)imide (LiFSI; CAS No. 171611-11-3), lithium bis(trifluoromethanesulfonyl)imide (LiTFSI; CAS No. 90076-65-6), lithium bis(pentafluoroethanesulfonyl)imide (LiBETI; CAS No. 132843-44-8), lithium bis(nonafluorobutanesulfonyl)imide (CAS No. 119229-99-1), lithium nonafluoro-N-[(trifluoromethane)sulfonyl]butanesulfonylamide (CAS No. 176719-70-3), lithium N,N-hexafluoro-1,3-disulfonylimide (CAS No. 189217-62-7), $CH_3COOLi$, $LiPF_6$, $LiBF_4$, $Li_2SO_4$, and $LiNO_3$.

The concentration of the electrolyte in the aqueous electrolyte solution can be set as appropriate within a range that does not exceed the saturation concentration of the electrolyte with respect to the solvent, according to desired battery characteristics. This is because, if a solid electrolyte remains in an aqueous electrolyte solution, the solid may inhibit battery reactions.

For example, when LiTFSI is used as the electrolyte, the aqueous electrolyte solution may contain 1 mol or more, particularly 5 mol or more, more particularly 7.5 mol or more of LiTFSI per kilogram of the water. The upper limit of the concentration of the electrolyte is not particularly limited, and may be, for example, 25 mol or less.

The non-aqueous electrolyte solution used herein is usually an electrolyte solution containing a lithium salt and a non-aqueous solvent.

Examples of the lithium salt include: inorganic lithium salts such as $LiPF_6$, $LiBF_4$, $LiClO_4$, and $LiAsF_6$; and organic lithium salts such as $LiCF_3SO_3$, $LiN(SO_2CF_3)_2$(Li-TFSI), $LiN(SO_2C_2F_5)_2$, and $LiC(SO_2CF_3)_3$.

Examples of the non-aqueous solvent include ethylene carbonate (EC), propylene carbonate (PC), butylene carbonate (BC), dimethyl carbonate (DMC), diethyl carbonate (DEC), ethyl methyl carbonate (EMC), $\gamma$-butyrolactone, sulfolane, acetonitrile (ACN), dimethoxymethane, 1,2-dimethoxyethane (DME), 1,3-dimethoxypropane, diethyl ether, tetraethylene glycol dimethyl ether (TEGDME), tetrahydrofuran, 2-methyl tetrahydrofuran, dimethyl sulfoxide (DMSO), and mixtures thereof. From the standpoint of ensuring a high dielectric constant and low viscosity, the non-aqueous solvent may be a mixture of a cyclic carbonate compound having a high dielectric constant and high viscosity such as EC, PC, or BC and a chain carbonate compound having a low dielectric constant and low viscosity such as DMC, DEC, or EMC, or may be a mixture of EC and DEC.

The concentration of the lithium salt in the non-aqueous electrolyte solution may be, for example, 0.3 M to 5 M.

The gel electrolyte is usually an electrolyte obtained by adding a polymer to a non-aqueous electrolyte solution for gelation.

Specifically, the gel electrolyte is obtained by adding a polymer such as polyethylene oxide, polypropylene oxide, polyacrylonitrile, polyvinylidene fluoride (PVDF), polyurethane, polyacrylate, or cellulose to the above non-aqueous electrolyte solution for gelation.

A separator that is impregnated with an electrolyte such as the above aqueous electrolyte solution and that prevents the positive electrode layer and the negative electrode layer from contacting each other may be used in the electrolyte layer.

The material of the separator is not particularly limited as long as it is a porous film. Examples of the material of the separator include resins such as polyethylene (PE), polypropylene (PP), polyester, polyvinyl alcohol, cellulose, and polyamide. Among all, the material of the separator may be polyethylene and polypropylene. The separator may have a single-layer structure or a multi-layer structure. Examples of the separator having a multi-layer structure include a separator having a two-layer structure of PE/PP, and a separator having a three-layer structure of PP/PE/PP or PE/PP/PE. The separator may be a non-woven fabric such as resin non-woven fabric or glass fiber non-woven fabric.

Solid Electrolyte Layer

The electrolyte layer may be a solid electrolyte layer composed of a solid. The solid electrolyte layer contains at least a solid electrolyte.

A known solid electrolyte that can be used in all-solid-state batteries can be used as appropriate as the solid electrolyte contained in the solid electrolyte layer. Examples of such a solid electrolyte include inorganic solid electrolytes such as sulfide-based solid electrolyte, oxide-based solid electrolyte, hydride-based solid electrolyte, halide-based solid electrolyte, and nitride-based solid electrolyte. The sulfide-based solid electrolyte may contain sulfur (S) as a main component of an anionic element. The oxide-based solid electrolyte may contain oxygen (O) as a main component of an anionic element. The hydride-based solid electrolyte may contain hydrogen (H) as a main component of an anionic element. The halide-based solid electrolyte may contain halogen (X) as a main component of an anionic element. The nitride-based solid electrolyte may contain nitrogen (N) as a main component of an anionic element.

The sulfide-based solid electrolyte may be sulfide glass, crystallized sulfide glass (glass-ceramic), or a crystalline material that is obtained by performing a solid-phase reaction process on a raw material composition.

The crystal state of the sulfide-based solid electrolyte can be checked by, for example, performing powder X-ray diffraction measurement of the sulfide-based solid electrolyte using CuK $\alpha$ radiation.

Sulfide glass can be obtained by amorphizing a raw material composition (e.g., a mixture of $Li_2S$ and $P_2S_5$). An example of the amorphization process is mechanical milling.

A glass-ceramic can be obtained by, for example, heat-treating sulfide glass. The heat treatment temperature need only be higher than the crystallization temperature (Tc) observed by thermal analysis measurement of sulfide glass, and is usually 195°C or higher. The upper limit of the heat treatment temperature is not particularly limited.

The crystallization temperature (Tc) of sulfide glass can be measured by differential thermal analysis (DTA).

The heat treatment time is not particularly limited as long as desired crystallinity of the glass-ceramic can be obtained. For example, the heat treatment time is in the range of one minute to 24 hours, and particularly in the range of one minute to 10 hours.

The method of the heat treatment is not particularly limited, but is, for example, a method using a firing furnace.

An example of the oxide-based solid electrolyte is a solid electrolyte containing Li element, Y element (Y is at least one of the following elements: niobium (Nb), boron (B), aluminum (Al), silicon (Si), phosphorus (P), titanium (Ti), zirconium (Zr), molybdenum (Mo), tungsten (W), and sulfur (S)), and oxygen (O) element. Specific examples of the oxide-based solid electrolyte include: garnet solid electrolytes such as $Li_7La_3Zr_2O_{12}$, $Li_{7-x}La_3(Zr_{2-x}Nb_x)O_{12}$ ($0 \le x \le 2$) and $Li_5La_3Nb_2O_{12}$; perovskite solid electrolytes such as (Li, La)$TiO_3$, (Li, La)$NbO_3$, and (Li, Sr)(Ta, Zr)$O_3$; NASICON solid electrolytes such as Li(Al, Ti)$(PO_4)_3$ and Li(Al, Ga)$(PO_4)_3$; Li-P-O-based solid electrolytes such as $Li_3PO_4$ and LIPON (compound $Li_3PO_4$ having a part of O substituted with nitrogen (N)); and Li-B-O-based solid electrolytes such as $Li_3BO_3$ and compound $Li_3BO_3$ having a part of O substituted with carbon (C).

The hydride-based solid electrolyte contains, for example, Li and a complex anion containing hydrogen. Examples of the complex anion include $(BH_4)^-$, $(NH_2)^-$, $(AlH_4)^-$, and $(AlH_6)^{3-}$.

An example of the halide-based solid electrolyte is $Li_{6-3z}Y_zX_6$ (X is either or both of chlorine (Cl) and bromine (Br), and z satisfies $0 < z < 2$).

An example of the nitride-based solid electrolyte is $Li_3N$.

The solid electrolyte may be in the form of particles from the standpoint of their excellent handleability.

The average particle size of the particles of the solid electrolyte is not particularly limited, but is, for example, 10 nm or more, and may be 100 nm or more. The average particle size of the particles of the solid electrolyte is, for example, 25 $\mu$m or less, and may be 10 $\mu$m or less.

In the present disclosure, the average particle size of particles is a value of a volume-based median diameter (D50) measured by laser diffraction and scattering particle size distribution measurement, unless otherwise specified. In the present disclosure, the median diameter (D50) is a diameter (volume mean diameter) that splits the cumulative volume size distribution of particles with half above and half below this diameter (50%).

One solid electrolyte may be used alone, or two or more solid electrolytes may be used in combination. When two or more solid electrolytes are used, the two or more solid electrolytes may be mixed, or a multi-layer structure composed of two or more layers of the individual solid electrolytes may be formed.

The proportion of the solid electrolyte in the solid electrolyte layer is not particularly limited, but is, for example, 50% by mass or more, and may be 60% by mass or more and 100% by mass or less, may be 70% by mass or more and 100% by mass or less, or may be 100% by mass.

The solid electrolyte layer may contain a binding agent from the standpoint of causing the solid electrolyte layer to exhibit plasticity etc. Examples of such a binding agent include the materials mentioned above as examples of the binding agent for the positive electrode layer. The solid electrolyte layer may contain 5% by mass or less of the binding agent from the standpoint of, for example, suppressing excessive agglomeration of the solid electrolyte and enabling formation of a solid electrolyte layer having a uniformly dispersed solid electrolyte in order to facilitate an increase in output power.

The thickness of the solid electrolyte layer is not particularly limited, and is usually 0.1 $\mu$m or more and 1 mm or less.

Examples of a method for forming a solid electrolyte layer include a method in which a solid electrolyte layer forming paste containing a solid electrolyte is applied to a support and dried, and a method in which a powder of a solid electrolyte material including a solid electrolyte is pressure-formed. Examples of the support are similar to the examples of the support mentioned above for the positive electrode layer. In the case of pressure-forming a powder of a solid electrolyte material, a press pressure of about 1 MPa or more and about 2000 MPa or less is usually applied to the powder.

The pressing method is not particularly limited, but examples of the pressing method are the methods mentioned above as examples for formation of the positive electrode layer.

The lithium secondary battery includes, as necessary, an exterior body that houses a stack of a positive electrode, an electrolyte layer, and a negative electrode, etc. The material of the exterior body is not particularly limited as long as it is stable against an electrolyte. Examples of the material of the exterior body include resins such as polypropylene, polyethylene, and acrylic resin.

The lithium secondary battery may be, for example, an aqueous lithium secondary battery, a non-aqueous lithium secondary battery, or an all-solid-state lithium secondary battery.

Examples of the shape of the lithium secondary battery include a coin, a laminate, a cylinder, and a quadrilateral prism. Applications of the lithium secondary battery are not particularly limited, but include, for example, power supplies for vehicles such as hybrid electric vehicles (HEVs), plug-in hybrid electric vehicles (PHEVs), battery electric vehicles (BEVs), gasoline vehicles, and diesel vehicles. The lithium secondary battery may be used particularly for traction power supplies for hybrid electric vehicles, plug-in hybrid electric vehicles, or battery electric vehicles. The lithium secondary battery according to the present disclosure may be used as power supplies for moving bodies other than vehicles (e.g., trains, ships, and aircrafts), or may be used as power supplies for electrical products such as information processing devices.

In a method for manufacturing a lithium secondary battery according to the present disclosure, for example, a positive electrode layer is first formed by pressure-forming a powder of a positive electrode mixture including a positive electrode active material containing lithium element on one surface of a positive electrode current collector. A positive electrode is thus obtained. Thereafter, lithium (Li) metal and dissimilar metal are simultaneously vacuum-deposited on one side of a negative electrode current collector to form a composite layer containing an alloy of lithium metal and dissimilar metal on the one side of the negative electrode current collector. Lithium metal is then vacuum-deposited on a surface of the composite layer to form a single lithium metal layer. A negative electrode layer composed of these two layers is thus formed. In this manner, the negative electrode layer is formed on the one side of the negative electrode current collector, and a negative electrode is thus obtained. Subsequently, a separator is prepared. The separator is placed between the positive electrode and the negative electrode, and an electrolyte solution is injected into the separator. The lithium secondary battery of the present disclosure may be produced in this manner.

Comparative Example 1

Production of Positive Electrode

As a positive electrode active material, particles of a lithium-nickel-cobalt-manganese complex oxide (layered structure, $LiNi_{0.33}Co_{0.33}Mn_{0.33}O_2$) having an average particle size of 10 $\mu$m, acetylene black (AB) as an electrically conductive material, and polyvinylidene fluoride (PVDF) as a binder were weighed to the following mass ratio: positive electrode active material : AB : PVDF = 80 : 8 : 2. Next, these materials were mixed in N-methyl-2-pyrrolidone (NMP) to a solid content of 56% by mass by using a planetary mixer to prepare a positive electrode layer forming slurry. This positive electrode layer forming slurry was applied to a strip of aluminum foil (positive electrode current collector) in the longitudinal direction of the strip by using a die coater, and dried at 120°C. The dried positive electrode layer forming slurry was pressed together with the aluminum foil. A strip of positive electrode having a positive electrode layer on a positive electrode current collector was thus produced.

Production of Negative Electrode

Lithium metal was volatilized in a vacuum deposition apparatus and deposited on Cu foil (negative electrode current collector) to produce a strip of negative electrode having a negative electrode layer with a single layer configuration of a single lithium metal layer on a negative electrode current collector.

Placement of Separator

A wound electrode body was produced by placing the produced positive and negative electrodes such that the positive and negative electrodes face each other with a strip of separator (three-layer structure of PP/PE/PP) therebetween and winding the resultant stack in the longitudinal direction. Thereafter, a positive electrode current collecting member was welded to the positive electrode, and a negative electrode current collecting member was welded to the negative electrode.

Preparation of Electrolyte Solution

A non-aqueous electrolyte solution was prepared by dissolving $LiPF_6$ as a supporting salt at a concentration of 1.0 M in a mixed solvent containing ethylene carbonate (EC) and dimethyl carbonate (DMC) at an EC-to-DMC volume ratio of 1 : 1.
The wound electrode body produced as described above and the non-aqueous electrolyte solution were placed into a battery case. A lithium secondary battery was thus assembled.

Comparative Example 2

A lithium secondary battery was assembled by a method similar to that of Comparative Example 1 except for the following points.
In the above section "Production of Negative Electrode," two crucibles, one containing lithium metal and one containing In as dissimilar metal were prepared, and the crucibles were heated by electron beam heating to simultaneously volatilize the lithium metal and the dissimilar metal in a vacuum deposition apparatus and deposit the lithium metal and the dissimilar metal on Cu foil (negative electrode current collector). A strip of negative electrode including a negative electrode layer with a single-layer configuration of a composite layer containing an alloy of lithium metal and dissimilar metal on a negative electrode current collector was thus produced.
The element percentage of the lithium metal in the alloy was 95 atomic%.

Example 1

A lithium secondary battery was assembled by a method similar to that of Comparative Example 2 except for the following points.
In the above section "Production of Negative Electrode," two crucibles, one containing lithium metal and one containing In as dissimilar metal were prepared, and the crucibles were heated by electron beam heating to simultaneously volatilize the lithium metal and the dissimilar metal in a vacuum deposition apparatus and deposit the lithium metal and the dissimilar metal on Cu foil (negative electrode current collector). A composite layer containing an alloy of lithium metal and dissimilar metal is thus formed on the negative electrode current collector. Thereafter, a crucible containing lithium metal was prepared, and the crucible was heated by electron beam heating to volatilize the lithium metal in the vacuum deposition apparatus and deposit the lithium metal on the composite layer to form a single lithium metal layer. A strip of negative electrode including, on a negative electrode current collector, a negative electrode layer with a two-layer configuration of a composite layer and a single lithium metal layer in this order from the negative electrode current collector side was thus produced.
The element percentage of the lithium metal in the alloy was 95 atomic%.
The ratio Z of the thickness X of the single lithium metal layer to the thickness Y of the composite layer (Z = X/Y) was 0.1.

Examples 2 to 16

In Examples 2 to 16, as shown in Table 1, a lithium secondary battery was assembled by a method similar to that of Example 1 except for the type of dissimilar metal used.

Examples 17 to 21

In Examples 17 to 21, as shown in Table 2, a lithium secondary battery was assembled by a method similar to that of Example 1 except for the ratio Z of the thickness X of the single lithium metal layer to the thickness Y of the composite layer (Z = X/Y).

Examples 22 to 27

In Examples 22 to 27, as shown in Table 3, a lithium secondary battery was assembled by a method similar to that of Example 1 except for the element percentage of the lithium metal in the alloy.

Evaluation of Output Characteristics

The voltage (open-circuit voltage) of the lithium secondary battery was adjusted to 3.70 V in advance. The lithium secondary battery was then discharged at 5C for eight seconds in a temperature environment of -5°C. As used herein, "1C" means a current value capable of charging the battery capacity (Ah) predicted from the theoretical capacity of the active material in one hour. A voltage drop $\Delta V$ at this time was acquired, and a resistance value was calculated using the following expression (1).

$$\text{Expression (1): resistance} = \Delta V / \text{current value of 5C}$$

Tables 1 to 3 show the calculation results of the battery resistances of Examples 1 to 27 and Comparative Example 2 with respect to the battery resistance of Comparative Example 1, where the battery resistance of Comparative Example 1 was normalized to 1.0. Upward arrows in the tables mean the "same as above."

Evaluation of Capacity Retention Rate

A cycle test was performed on the lithium secondary batteries in an environment of 60°C in the voltage range of 3.3 V to 4.2 V. Charging and discharging were performed by a constant current method at a current rate of 1C. The lithium secondary batteries produced as described above were charged with a constant current (CC) at a rate of 1C in an environment of 60°C until the voltage reached 4.2 V, and then charged with a constant voltage (CV) until the current reached 1/50C. Thereafter, the lithium secondary batteries were discharged with a constant current (CC) at a rate of 1C until the voltage reached 3.3 V. The discharge capacity at this time was taken as an initial discharge capacity. The discharge capacity at the 200th cycle of the cycle test was measured by the same method as that for the initial discharge capacity, and the capacity retention rate after the charge and discharge cycle was calculated by dividing the discharge capacity at the 200th cycle of the cycle test by the initial discharge capacity. The results are shown in Tables 1 to 3.

Evaluation of Capacity Retention Rate after Storage

The lithium secondary batteries of Examples 1 to 27 and Comparative Examples 1 and 2 were charged to 3.8 V and were stored in a constant temperature bath in an environment of 60°C for 100 days, and the capacity retention rate after storage (100 $\times$ discharge capacity after storage/discharge capacity before storage) was calculated. Charging and discharging were performed by a constant current method at a current rate of 1C in an environment of 60°C in the voltage range of 3 V to 4.2 V. The results are shown in Tables 1 to 3.

Table 1

|  | Dissimilar Metal Element | Single lithium Metal Layer | Ratio Z of Thickness X of Single lithium Metal Layer to Thickness Y of Composite Layer (X/Y) | Lithium Element Percentage in Alloy (atm%) | Capacity Retention Rate (%) | Capacity Retention Rate After Storage (%) | Normalized Battery Resistance (Low Temperature) |
|---|---|---|---|---|---|---|---|
| Comparative Example 1 | None | - | - | 100 | 50 | 40.3 | 1 |
| Comparative Example 2 | In | Not Present | - | 95.00 | 63.2 | 55.3 | 0.81 |
| Example 1 | ↑ | Present | 0.1 | ↑ | 85.2 | 90.1 | 0.54 |
| Example 2 | Bi | ↑ | ↑ | ↑ | 85.3 | 91.2 | 0.53 |
| Example 3 | Pd | ↑ | ↑ | ↑ | 84.3 | 89.9 | 0.56 |
| Example 4 | Sn | ↑ | ↑ | ↑ | 83.9 | 90.2 | 0.52 |
| Example 5 | Si | ↑ | ↑ | ↑ | 85.4 | 89.5 | 0.57 |
| Example 6 | Au | ↑ | ↑ | ↑ | 85.6 | 89.2 | 0.51 |
| Example 7 | Ag | ↑ | ↑ | ↑ | 86.1 | 89.3 | 0.55 |
| Example 8 | Pt | ↑ | ↑ | ↑ | 85.1 | 89.4 | 0.56 |
| Example 9 | Zn | ↑ | ↑ | ↑ | 85.4 | 89.5 | 0.58 |
| Example 10 | Al | ↑ | ↑ | ↑ | 84.6 | 89.1 | 0.53 |
| Example 11 | Mg | ↑ | ↑ | ↑ | 84.3 | 89.9 | 0.53 |
| Example 12 | Sr | ↑ | ↑ | ↑ | 86.2 | 90.9 | 0.59 |
| Example 13 | Ba | ↑ | ↑ | ↑ | 85.9 | 90.4 | 0.55 |
| Example 14 | Ga | ↑ | ↑ | ↑ | 85.4 | 89.5 | 0.53 |
| Example 15 | Ca | ↑ | ↑ | ↑ | 85.2 | 90.5 | 0.54 |
| Example 16 | Ge | ↑ | ↑ | ↑ | 85 | 90.3 | 0.53 |

Table 2

|  | Dissimilar Metal Element | Single lithium Metal Layer | Ratio Z of Thickness X of Single lithium Metal Layer to Thickness Y of Composite Layer (X/Y) | Lithium Element Percentage in Alloy (atm%) | Capacity Retention Rate (%) | Capacity Retention Rate After Storage (%) | Normalized Battery Resistance (Low Temperature) |
|---|---|---|---|---|---|---|---|
| Comparative Example 1 | None | - | - | 100 | 50 | 40.3 | 1 |
| Example 17 | In | Present | 0.0001 | 95.00 | 77.2 | 79.5 | 0.74 |
| Example 18 | ↑ | Present | 0.001 | ↑ | 85.3 | 89.9 | 0.55 |
| Example 19 | ↑ | Present | 0.01 | ↑ | 84.2 | 91.1 | 0.56 |
| Example 1 | ↑ | Present | 0.1 | ↑ | 85.2 | 90.1 | 0.54 |

(continued)

| | Dissimilar Metal Element | Single lithium Metal Layer | Ratio Z of Thickness X of Single lithium Metal Layer to Thickness Y of Composite Layer (X/Y) | Lithium Element Percentage in Alloy (atm%) | Capacity Retention Rate (%) | Capacity Retention Rate After Storage (%) | Normalized Battery Resistance (Low Temperature) |
|---|---|---|---|---|---|---|---|
| Example 20 | ↑ | Present | 0.3 | ↑ | 84.6 | 88.8 | 0.55 |
| Example 21 | ↑ | Present | 0.4 | ↑ | 78.2 | 81.1 | 0.69 |

Table 3

| | Dissimilar Metal Element | Single lithium Metal Layer | Ratio Z of Thickness X of Single lithium Metal Layer to Thickness Y of Composite Layer (X/Y) | Lithium Element Percentage in Alloy (atm%) | Capacity Retention Rate (%) | Capacity Retention Rate After Storage (%) | Normalized Battery Resistance (Low Temperature) |
|---|---|---|---|---|---|---|---|
| Example 22 | In | Present | 0.1 | 30.00 | 77.3 | 79.8 | 0.73 |
| Example 23 | ↑ | ↑ | ↑ | 40.00 | 85.1 | 90.3 | 0.55 |
| Example 24 | ↑ | ↑ | ↑ | 60.00 | 85.3 | 90.5 | 0.54 |
| Example 25 | ↑ | ↑ | ↑ | 80.00 | 84.4 | 89.9 | 0.56 |
| Example 26 | ↑ | ↑ | ↑ | 90.00 | 85.3 | 88.8 | 0.52 |
| Example 1 | ↑ | ↑ | ↑ | 95.00 | 85.2 | 90.1 | 0.54 |
| Example 27 | ↑ | ↑ | ↑ | 99.97 | 83.2 | 88.5 | 0.54 |
| Comparative Example 1 | None | - | - | 100 | 50 | 40.3 | 1 |

Evaluation Results

The results shown in Tables 1 to 3 demonstrate that Examples 1 to 27 have a lower battery resistance, a higher capacity retention rate after the charge and discharge cycle, and a higher capacity retention rate after storage than Comparative Examples 1 and 2. The results shown in Table 2 demonstrate that, by adjusting the ratio Z of the thickness X of the single lithium metal layer to the thickness Y of the composite layer (Z = X/Y) to a value within a predetermined range, the battery resistance can further be reduced and the capacity retention rate after the charge and discharge cycle and the capacity retention rate after storage can be further improved.
The results shown in Table 3 demonstrate that, by adjusting the element percentage of Lithium metal in the alloy to a value within a predetermined range, the battery resistance can further be reduced and the capacity retention rate after the charge and discharge cycle and the capacity retention rate after storage can be further improved.

**Claims**

1. A negative electrode (17) for a lithium secondary battery, the negative electrode (17) comprising:

   a negative electrode current collector (15); and
   a negative electrode layer (13), wherein

the negative electrode layer (13) includes a composite layer (18) and a single lithium metal layer (19), the composite layer (18) including, as a negative electrode active material, an alloy of lithium metal and dissimilar metal,

the composite layer (18) and the single lithium metal layer (19) are arranged in this order from the negative electrode current collector (15), and

the dissimilar metal is an element that is able to form a solid solution with the lithium metal or an element that is able to form an intermetallic compound with the lithium metal.

2. The negative electrode (17) according to claim 1, wherein a ratio Z of a thickness X of the single lithium metal layer (19) to a thickness Y of the composite layer (18) (Z = X/Y) is $0.0001 \leq Z \leq 0.4$.

3. The negative electrode (17) according to claim 2, wherein the ratio Z is $0.001 \leq Z \leq 0.3$.

4. The negative electrode (17) according to any one of claims 1 to 3, wherein an element percentage of lithium element in the alloy is 30.00 atomic% or more and 99.97 atomic% or less.

5. The negative electrode (17) according to any one of claims 1 to 4, wherein mass of the alloy of the lithium metal and the dissimilar metal is 50% or more of total mass of the composite layer (18).

6. The negative electrode (17) according to any one of claims 1 to 5, wherein the dissimilar metal is one or more elements selected from the group consisting of Mg, Bi, Pd, Sn, Si, Au, Ag, Pt, Zn, Al, In, Sr, Ba, Ga, Ca, and Ge.

7. A method for manufacturing a negative electrode (17) for a lithium secondary battery, the method comprising:

preparing a negative electrode current collector (15);
forming a composite layer (18) including an alloy of lithium metal and dissimilar metal by vacuum-depositing the lithium metal and the dissimilar metal on the negative electrode current collector (15); and
forming a single lithium metal layer (19) by vacuum-depositing lithium metal on the composite layer (18), wherein the dissimilar metal is an element that is able to form a solid solution with the lithium metal or an element that is able to form an intermetallic compound with the lithium metal.

8. The method according to claim 7, wherein a ratio Z of a thickness X of the single lithium metal layer (19) to a thickness Y of the composite layer (18) (Z = X/Y) is $0.0001 \leq Z \leq 0.4$.

9. The method according to claim 8, wherein the ratio Z is $0.001 \leq Z \leq 0.3$.

10. The method according to any one of claims 7 to 9, wherein an element percentage of lithium element in the alloy is 30.00 atomic% or more and 99.97 atomic% or less.

# FIG. 1

Europäisches
Patentamt

European
Patent Office

Office européen
des brevets

# EUROPEAN SEARCH REPORT

Application Number

**EP 22 20 6527**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P<br>A,P | WO 2022/072959 A1 (APPLE INC [US])<br>7 April 2022 (2022-04-07)<br>* paragraph [0018] – paragraph [0031];<br>claims 1,4; figure 1 *<br>----- | 1,4-7,10<br><br>2,3,8,9 | INV.<br>H01M4/134<br>H01M4/36<br>H01M4/38<br>H01M4/40<br>H01M10/052<br>H01M10/0565<br>H01M10/0568 |
| X | ZIYANG LU ET AL: "Constructing a High-Strength Solid Electrolyte Layer by In Vivo Alloying with Aluminum for an Ultrahigh-Rate Lithium Metal Anode",<br>ADVANCED FUNCTIONAL MATERIALS, WILEY – V C H VERLAG GMBH & CO. KGAA, DE,<br>vol. 30, no. 7,<br>13 December 2019 (2019-12-13), page n/a,<br>XP072406738,<br>ISSN: 1616-301X, DOI:<br>10.1002/ADFM.201907343<br>* abstract; figure 1 *<br>----- | 1,4 | |
| X | LIN YINGXIN ET AL: "Strengthening dendrite suppression in lithium metal anode by in-situ construction of Li-Zn alloy layer",<br>ELECTROCHEMISTRY COMMUNICATIONS, ELSEVIER AMSTERDAM, NL,<br>vol. 108, 21 October 2019 (2019-10-21),<br>XP085894106,<br>ISSN: 1388-2481, DOI:<br>10.1016/J.ELECOM.2019.106565<br>[retrieved on 2019-10-21]<br>* abstract; figure 1 *<br>----- | 1,4 | |

TECHNICAL FIELDS
SEARCHED (IPC)

H01M

The present search report has been drawn up for all claims

| Place of search | Date of completion of the search | Examiner |
|---|---|---|
| Munich | 10 May 2023 | Radeck, Stephanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 22 20 6527**

This annex lists the patent family members relating to the patent documents cited in the above-mentioned European search report.
The members are as contained in the European Patent Office EDP file on
The European Patent Office is in no way liable for these particulars which are merely given for the purpose of information.

**10-05-2023**

| Patent document cited in search report | | Publication date | Patent family member(s) | | Publication date |
|---|---|---|---|---|---|
| WO 2022072959 | A1 | 07-04-2022 | US | 2022093908 A1 | 24-03-2022 |
| | | | WO | 2022072959 A1 | 07-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020184513 A
- JP 2021077640 A

**Non-patent literature cited in the description**

- *CHEMICAL ABSTRACTS,* 171611-11-3
- *CHEMICAL ABSTRACTS,* 90076-65-6
- *CHEMICAL ABSTRACTS,* 132843-44-8
- *CHEMICAL ABSTRACTS,* 119229-99-1
- *CHEMICAL ABSTRACTS,* 176719-70-3
- *CHEMICAL ABSTRACTS,* 189217-62-7